Europäisches Patentamt

European Patent Office

Office européen des brevets

(19)

(11) **EP 1 627 803 A1**

(12) **EUROPEAN PATENT APPLICATION**

(43) Date of publication:
   **22.02.2006 Bulletin 2006/08**

(51) Int Cl.:
   *B62D 53/00* (2006.01)   *B60D 1/00* (2006.01)
   *G01L 1/22* (2006.01)

(21) Application number: **05255007.6**

(22) Date of filing: **11.08.2005**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30) Priority: **19.08.2004 GB 0418446
   31.01.2005 GB 0501920**

(71) Applicant: **BRADLEY DOUBLELOCK LIMITED
   West Yorkshire. BD16 2NH (GB)**

(72) Inventors:
   • **Spencer, Andrew
     Bingley
     West Yorkshire BD16 2NH (GB)**
   • **Histed, Martin
     Bingley
     West Yorkshire BD16 2NH (GB)**
   • **Child, Craig
     Bingley
     West Yorkshire BD16 2NH (GB)**

(74) Representative: **Sherrard-Smith, Hugh et al
   Appleyard Lees,
   15 Clare Road
   Halifax, HX1 2HY (GB)**

(54) **Trailers**

(57)   The present invention includes a trailer 10 supported on a pair of wheels 14. When loaded, or during loading the strain in one or both arms 18 is monitored. If that exceeds a predetermined value then adjustment of the load can take place either in the forward or aft direction or in a sidewards direction. Two wheels are provided at each side of the frame each pivotally connected to a common member that is in turn pivotally connected to the frame.

Fig. 1

**Description**

The present invention relates to a trailer and to a method of operating a trailer. In this specification any trailed object is included, including, for instance, caravans. The invention is particularly suited for detecting an overload condition at the trailer hitch point which is a component of the trailer load condition and the distribution of the payload at any given time.

Up until now, trailers have been towed with the operator being unaware or unable to detect the loading of the trailer. For instance, the load may be too far forwards of the wheels of the trailer or too far rearwards thereby making towing of the trailer a potentially hazardous operation. Alternatively or additionally, the load may be located more towards one side of the trailer than the other again resulting in safety being jeopardised.

It is an object of the present invention to attempt to overcome at least one of the above or other disadvantages.

The present invention comprises a trailer including a forwards connection arranged, in use, to be connected to a vehicle that tows the trailer, the trailer further including at least one wheel assembly for supporting the trailer rearwards of the forwards connection, the trailer further including monitoring means arranged to monitor the bending moment about the wheel assembly forwards of the wheel assembly.

The trailer may include a trigger switch or any other mechanical or electronic or electrical means arranged to actuate the monitoring means when a load is mounted on the trailer.

The trailer may include monitoring means arranged to cease monitoring after a predetermined event which may comprise a period of time having elapsed or which may comprise a predetermined event having occurred after towing has commenced such as the predetermined event being connected to the braking of the vehicle such as at least one activation of the brake.

The trailer may be arranged to monitor the bending moment when the trailer is being towed and may be arranged to monitor a change in the bending moment when the trailer is being towed such as to give an indication that the bending moment has moved beyond a predetermined value such as beyond that value for a predetermined time.

The trailer may be arranged to give an indication as to when the load has moved beyond the correct region of the trailer and may be arranged to give different indications when the load is approaching a safe region or when the load has gone beyond the correct or safe region.

The trailer may be arranged to have a load located thereon with the load having wheels and with the load being rolled up the ramp on to the trailer such as by driving a vehicle on to the trailer.

The forwards region may comprise the forward connection of the trailer to a towing vehicle.

The monitoring means may be arranged to give an indication when the bending moment exceeds a predetermined amount.

The monitoring means may be arranged to give an indication when the bending moment falls below a predetermined amount.

The monitoring means may be arranged to give an indication of the bending moment at at least two locations with the first one of those locations being such that the strain alters at a first rate when the bending moment increases and with a second one of those locations being such that the strain alters at a second rate, different from the first rate when the bending moment increases. The first rate may be an increase in strain. The second rate may be a decrease in strain. The first location may be at a different elevation than the second location. One of the locations may be a top region of a structural member of the trailer and the other may be a bottom region of the same structural member.

The monitoring may comprise monitoring the bending moment at the two regions including any of the monitoring at the two locations.

The monitoring may comprise monitoring the bending moment at two locations of spaced structural members which converge towards each other in the forwards direction. The structural members may be connected to the forwards connection. The trailer may comprise the monitoring comprising comparing the bending moment at the two regions such as by monitoring the difference in the bending moment which may include monitoring when the difference in the bending moment exceeds a predetermined amount.

The monitoring may comprise means for monitoring the bending moment during loading of the trailer.

The monitoring may comprise means for monitoring the bending moment after loading of the trailer.

The monitoring may comprise means for continuously monitoring the bending moment. The monitoring may comprise means for monitoring the bending moment at selected times.

The trailer may include means for monitoring the bending moment by monitoring the strain which means may include at least one strain gauge which may be adhered to the trailer.

The trailer may include means for giving an audible or visual indication of the bending moment.

The trailer may include power receiving means powering the monitoring means from a vehicle that is arranged, in use, to tow the trailer.

The trailer may comprise means for using the monitoring means when the trailer is attached to a vehicle.

The trailer may comprise means for using the monitoring means when the trailer is supported by a jockey wheel.

The trailer may comprise the wheel assembly including a suspension means between the wheel assembly and the body of the trailer which may comprise a spring or, alternatively or additionally, may include a damper.

The trailer may include at least two wheel assemblies spaced apart in the fore and aft direction. Each wheel assembly may be connected to a common connecting member which is, in turn, pivotally connected to the trailer at a location between the two wheel assemblies. The wheel assemblies may be able to provide the sole support for the trailer.

There may be recording means arranged to give an indication of the bending moment such as when the bending moment goes beyond a predetermined value and the recording means may be arranged to give an indication of the time. The recording means may be arranged to give an indication of the bending moment when the trailer is being towed. The recording means may be arranged to give an indication of when the bending moment has exceeded a predetermined amount only when the excess has occurred for more than a predetermined time.

The present invention may be used with trailers (which include trailed equipment) typically in the 500 Kg to 5000 Kg range.

The invention may be arranged to give an indication as to when an overload condition is reached.

The monitoring may be arranged to take place at the trailer coupling or at the jockey wheel. The monitoring may be integral into the trailer itself.

The invention may include a control circuit.

The monitoring may be charged by a stand alone battery or batteries. The circuit may be arranged to receive a top up charge or even be charged directly from the towing vehicle. Alternatively or additionally, power may be arranged to be provided by solar cells or, alternatively or additionally, a piezo-electric crystal that may be systematically activated, for example by means of an overrun coupling action triggering a switch during normal towing operations.

Monitoring may also be arranged to take place whilst the trailer is being towed. In this case, there may be an indication in the cab towing the vehicle. In this way an operator may be made aware of when the load is shifted to an unsafe condition.

The present invention also includes a method of operating a trailer comprising monitoring the bending moment at a location forwards of a wheel assembly of the trailer.

The method may comprise controlling the load in dependence upon the monitored bending moment such as by adjusting the load which may include adjusting the load in the fore and aft direction.

The method may comprise moving the load to a correct loading region by an indication being given as a result of the monitoring such as an indication that the load is approaching the correct loading position as a result of the monitoring. The method may comprise an indication being given when the load has passed the correct loading position or when the load has gone beyond the correct loading region. The method may comprise giving an alarm when the bending moment exceeds a predetermined value. The method may comprise recording the bending moment or strain. The method may comprise recording the time with the recordal of the bending moment.

The method may comprise monitoring the bending moment when the trailer is being towed.

According to a further aspect of the present invention, a trailer includes a frame at an outer region and at least two wheels on each side of the trailer, the two wheels at each side being spaced from each other in the fore and aft direction, the wheels at each side being connected to a support member which is pivotally connected to the frame.

The opposed wheels at each side may be pivotally connected to an arm that extends across the trailer. The two wheels may each be pivotally connected to the arm via a link that is pivotally connected to both the arm and the wheel.

The pivotal connection of the support member to the frame at each side may be via separate pivot members which may comprise stub axles.

The frame may include front, rear and side members with there being no frame members extending between the side members apart from the front and rear members.

The pivot of the support member to the frame may be equally spaced from the fore and aft pivots of the spaced wheels.

The pivot of the support member to the frame may be a free pivot.

The load at each fore and aft wheel may be arranged to be unchanged in a range of elevation of a connecting portion arranged, in use, to be connected to a towing vehicle.

The load on each fore and aft wheel may be arranged to be unchanged when the elevation of the connecting portion is between upper and lower limits.

There may be load monitors arranged to monitor the load on each support member and at a location forwards of the support members with there being less load monitors than wheels.

The frame may include at least two members each extending along a different side of the trailer, each member cooperating with a further member that adds to the rigidity of the frame. The further member may also comprise an attachment for a towing vehicle. The trailer may include at least one further member at the front or rear of the frame of the trailer cooperating with the frame member at the front or rear to add to the rigidity of the frame.

According to another aspect of the present invention, a trailer includes a front region including part of a towing connector, the towing connector including means for monitoring an event on the trailer.

The front region may be arranged to monitor the strain on part of the trailer.

The front region may be arranged to monitor the load at part of the trailer.

The trailer may include a strain gauge which may be located in a recess in the front region.

The front region may be detachably mounted on the trailer, and the trailer may include adjustment means arranged to alter the monitoring in accordance with different trailers for instance by altering a limit load at the front of the trailer.

The front region may comprise a head including monitoring means located rearward of a vertical line passing through the location of a connector on a vehicle to which the trailer is, in use, arranged to be connected.

According to another aspect of the present invention, a method of operating a trailer comprises monitoring a front region of a trailer.

The method may comprise attaching a front region of a trailer to a trailer.

The method may comprise detaching a front region of a trailer which is not able to perform a monitoring function and replacing that front region with a front region that is able to perform a monitoring function.

The method may comprise altering the monitoring in accordance with operating conditions of the trailer.

Other features of the method and apparatus are defined in the claims.

Any of the features herein referred to may be combined.

The present invention may be carried into practice in various ways but one embodiment will now be described, by way of example, and with reference to the accompanying drawings in which:-

Figure 1 is a perspective view of a trailer 10;

Figure 2 is a diagram 12 of a strain measurement circuit used in association with either trailer embodiment

Figure 3 is a front perspective view of walking beam axle trailer 110 without the suspension arrangement being shown;

Figure 4 is a side view of the trailer 110 with the suspension arrangement;

Figure 5 is a detail of the wheel mounting showing the detail of one suspension mount;

Figure 6 is a front perspective view of a further walking beam trailer 210, and

Figure 7 is an underneath perspective view of Figure 6.

The trailer 10 includes a pair of wheels 14 that support a container 16. Forward of the container are a pair of arms 18 that converge towards, and meet at a vehicle connection hitch 20. The hitch 20 is made up of a head 20A and a coupling 20B which are detachably connected together and detachably connected to the trailer. In use, the hitch 20 is lifted over a ball or pintle on a vehicle in order to tow the trailer. In the towing mode the wheels of the trailer and the hitch support the weight of the trailer and the load.

When not attached to a vehicle, or when being attached to a vehicle, a jockey wheel 72 can be raised or lowered relative to the arms 18 by rotation of a screw thread connected to a handle 24.

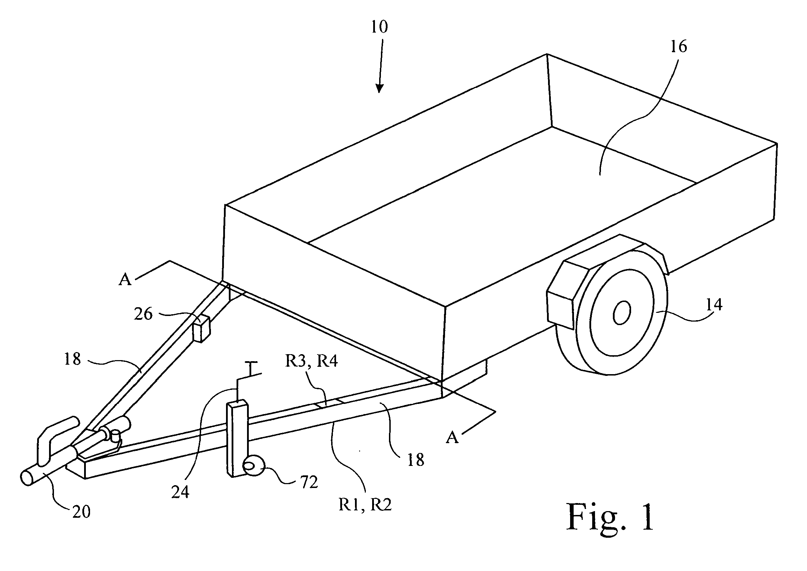

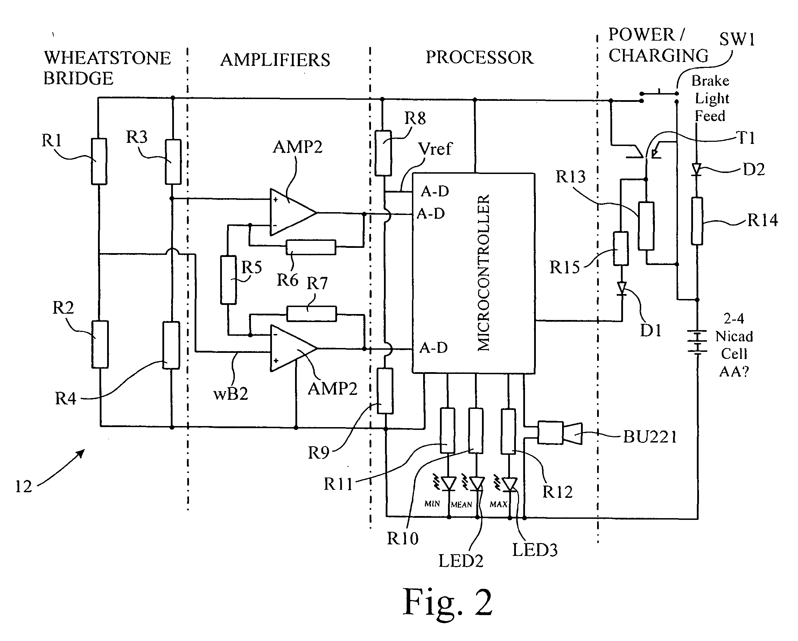

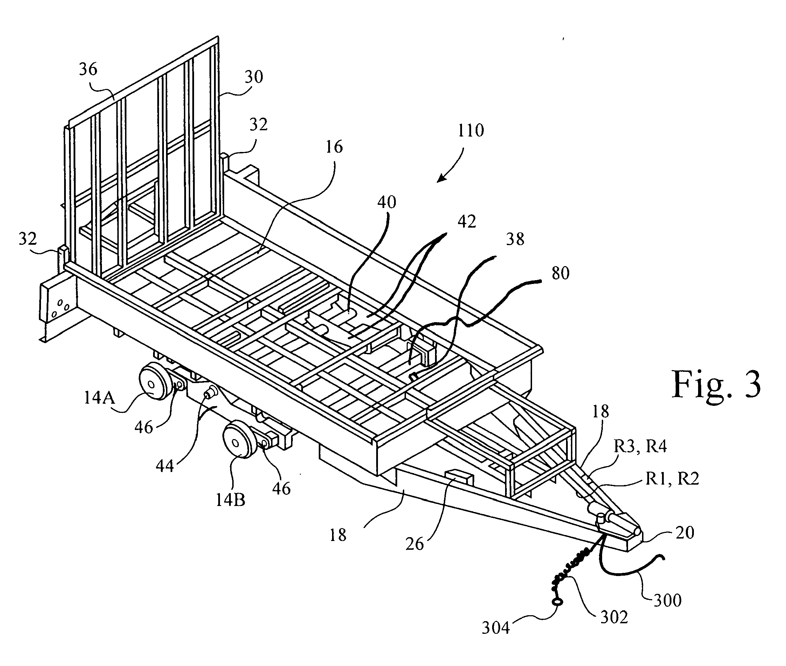

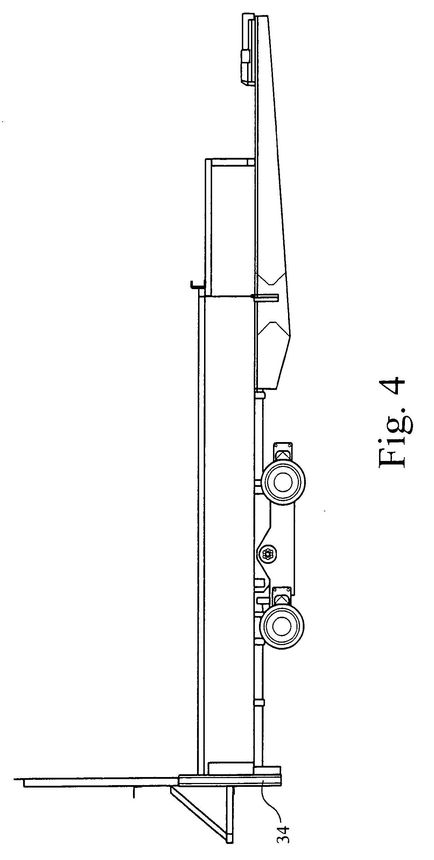

Figures 3 to 5 and 6 and 7 show alternative trailers and like parts to those in Figures 1 and 2 have been given the same number. In Figures 3 to 5 though the trailer hitch is not yet attached and the jockey wheels are not shown.

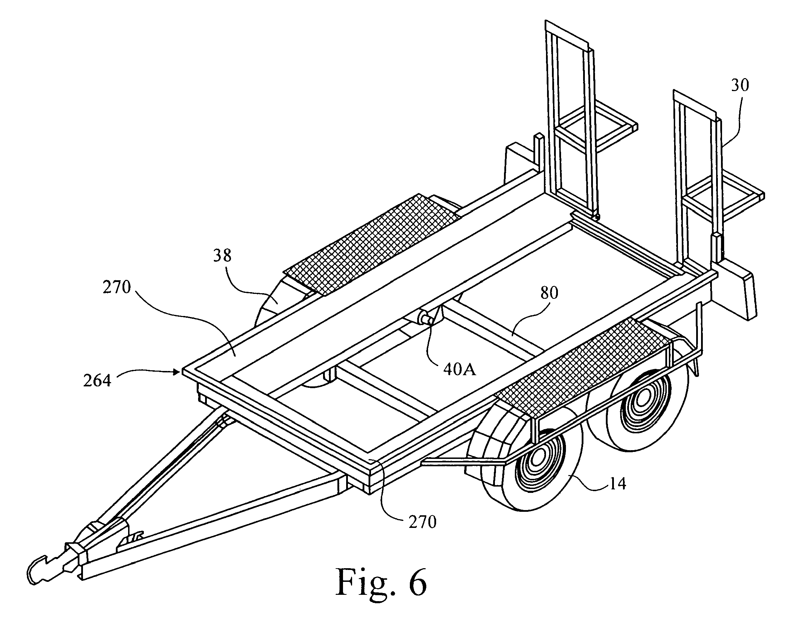

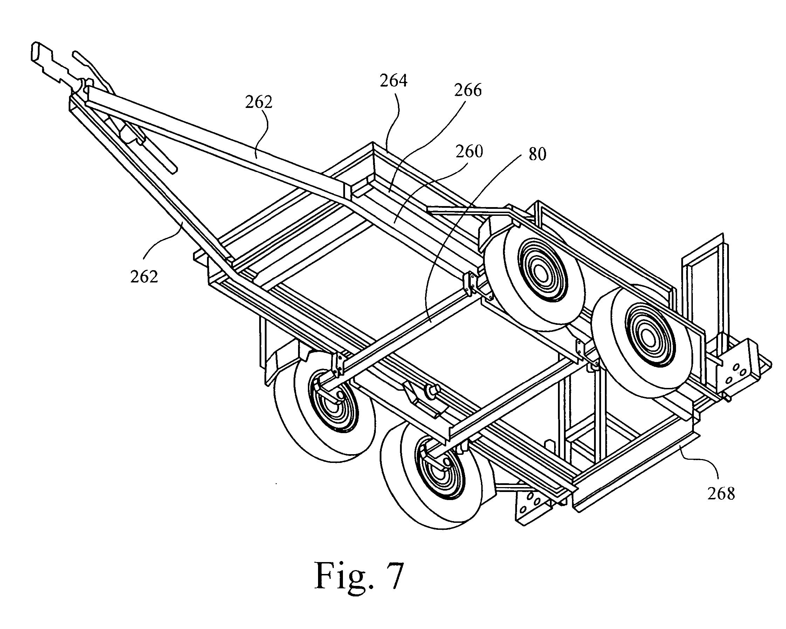

The container 16 in these embodiments though can be used to typically carry contractor's plant and equipment such as excavators, diggers and implements, but also a varying and wide range of vehicles and cargoes. Typically the diggers are driven onto the trailer by lowering the back gate or ramps 30 by releasing pins 32 at either side and pivoting the gate about an axis 34 such that the end 36 of the gate 30 rests on the ground. The trailer may be provided with a mesh or solid floor to support the digger (not shown). The container is provided with a pedal 38 in the load area that is engaged by the digger as the digger is driven onto the trailer to actuate a system or switch to commence monitoring. In Figures 6 and 7 the ramps 30 include a support 31 to assist in preventing any tipping or loading of the trailer during loading and unloading.

The wheel assembly includes a possibly freely pivoting shaft 40 extending through fixed plates 42 at either side of the trailer. The pivot of the shaft 40 is midway between the pivots of the fore and aft wheels 14A, 14B. A bump stop may be provided to prevent the front or back of any of the trailer bodies from grounding and to permit the trailer to remain at a modest angle to the horizontal rather than resting on the ground when loading with the loading platform being at a considerable angle to the ground. A box section 44 is pivotally mounted on the pivot pin at each side. At each forwards and rearwards end of the box section, arms 46 are mounted, each arm extending rearwards from its mounting on the box section and with a wheel assembly 14A or 14B being mounted at the trailing end of each arm.

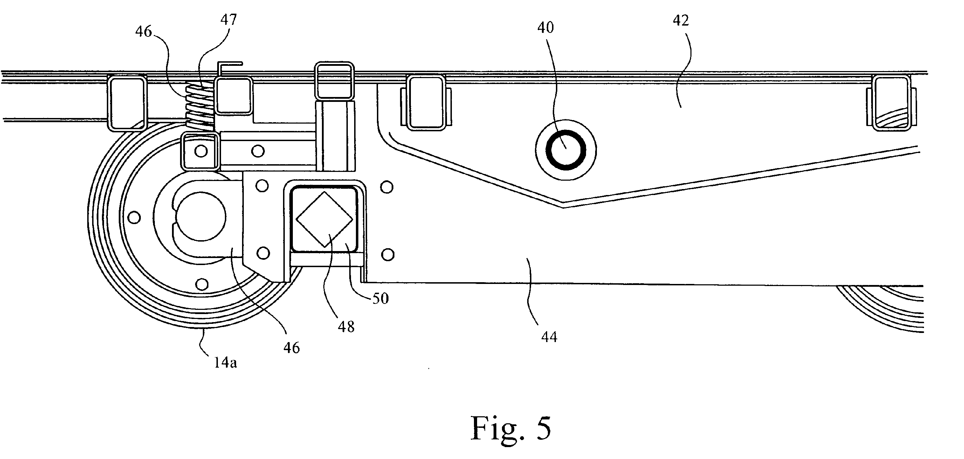

As shown in Figure 5, the wheel assembly 14A (or 14B) includes a spring 46 and possibly a damper 47 extending between the wheel assembly and the base of the floor of the trailer. Limited pivotal movement of the arms 45 about the mounting to the box section is permitted as:a result of a square section 48 of the arm extending through a rubber block 50 secured to the box section.

The spacing of the wheels 14A and 14B mean that the truck can be driven on and off the trailer with the trailer maintaining its general horizontal platform, without tilting. In addition the spring and damper and the rubber block resist significant movement of the wheel assemblies 14A and 14B and thus pivotal movement of the box section about the pivot shaft 40. In the embodiment shown :in Figures 6 and 7, the shaft 40 is replaced by stub axles 40A at either side.

In addition to or as an alternative to the strain gauges being mounted at the locations shown in the drawings,: a strain gauge or gauges may be connected in the head 20A, for instance by being adhered to the head or by being located in a milled recess in the head just a short distance away from the region where the top of a ball of a towing vehicle cooperates with the head and towards the wheels of the trailer. That location may be on top of the head.

Any or all of the strain measurements described herein may be used to give an indication of the load at the hitch and, alternatively or additionally, the load on the wheels and, alternatively or additionally, the load at each wheel.

Thus with the trailers shown, the severe nose load or severe negative nose load is avoided as compared to conventional trailers having a double axle, each mounted separately to the trailer, as the present trailer ensures that the load on the axle(s) are supported more evenly.

In addition, the load applied to the wheels remains the same even if the front of the trailer is raised or lowered. Thus the trailer can be used with vehicles having a different towing height. That height may vary from 395 to 465 mm from the ground, for instance.

Each shaft 40 may be provided with a load monitor as may a portion forwards of the shaft such as the towing portion. In this way the weight of the trailer and load can be measured with there being one less monitor than there are wheels.

The or each wheel 14 on the shaft 40 or both may be mounted on or comprise stub axles. In this instance the load at those axles may be monitored by drilling a short circumferentially inner part of the axles out in the axial direction and mounting strain gauges on the drilled part, for instance on the upper and lower walls of the part that has been drilled. These gauges will give an indication:of the strain in the axles and thus an indication of the weight at each wheel.

A mechanical clamping system may replace the fabric straps which are currently used. The system clamps the excavator in three locations, over both tracks of the excavator and at the end of the boom of the excavator where the geometry of the knuckle of the excavator provides an orifice whereby a locating pin or a further clamping mechanism can be passed through and locked. The anchor points for the track clamps may typically be the pivot pins used in the walking beam axle or a strengthened position at any point the trailer superstructure. Anchoring the excavator in this manner makes full use of the stiffness and strength of the machine itself in providing a stable and durable platform on which it can sit. All three clamps are both typically mechanically and/or electronically interlocked and will sound an alarm if they are not engaged when the excavator is being transported.

In order to ensure that the load of any trailer is not too far forwards or rearwards with respect to the wheels 14, a strain measurement circuit is mounted on one or the other or both arms 18, forward of the wheels 14. The strain in one or both arms (either when supported by the jockey wheel or by a vehicle or with the hitch on the ground) can then be monitored to ensure that there is not a disproportional degree of load forward or rearward of the wheels such as would exert an undue downwards or upwards force on the ball of a towing vehicle.

The detailed operation of the circuit will be described later. However, assuming that weight is being increasingly supported forwards of the wheels, then there would be a tension force on the lower section of the arms 18 (or at least an increased in the strain on the underside of the arms and a decrease in the strain on the upperside of the arms). Accordingly resistors R1 and R2 may be located on the underside of an arm with resistors R3 and R4 being mounted on top of an arm. They may be mounted by adhesive.

The circuit and the associated components may be mounted in a box 26 on the arms 18. The operating amplifiers and the microprocessor or processors cause low power consumption.

The strain of the vehicle is therefore able to be monitored either after loading or during loading with the load being altered if the strain exceeds a predetermined amount or with the load being monitored to ensure that there is an optimum downwards force exerted on the hitch or to ensure that the downwards force on the hitch is within a predefined range.

Monitoring can also take place to ensure that the load is not more towards one side of the trailer than the other. In this arrangement both arms will be provided with a strain measurement as previously described. Then should the strain in one arm increase or decrease more than that in the other arm again a warning can be given. The relative decrease or increase may be arranged to give an indication when the difference in strain rises above or below or both a predetermined value.

As a result of the load being monitored possible events such as adjusting the load more forwardly or rearwardly or sideways or any combination thereof may occur.

The hitch 20 may be detachably mounted on the trailer as previously mentioned. When the hitch is provided with strain gauges an existing conventional trailer may have the existing hitch 20 or head 20A detached and replaced by a head or hitch having the strain gauge thus converting the trailer to one that is able to operate as described herein. Furthermore, the controls that are associated with the strain gauge may have adjustment features or replacement features that take into account the different trailers in which the hitch may be mounted on. For instance, one trailer may be arranged to cope with a larger nose load than another in which case the alarm threshold for nose load may be altered.

There may be means for recording the bending moment or strain being monitored which may include a time monitoring means to determine if the trailer has been towed in an unsafe manner or not.

The circuit comprises typically a Wheatstone bridge or bridges typically in parallel formed by the pair of potential dividers R1, R2 and R3, R4. The potential dividers are shown as being formed by resistors R1-R4. However, it will be realised that to perform load measurement, at least one of these resistors will be a resistive strain gauge. The circuit may be located in the region of the underside of the coupling or any other convenient place.

In the preferred embodiment of the present invention, all four of the resistors R1-R4 will be resistive strain gauges. In order to increase the sensitivity of the circuit, each strain gauge pair R1, R2 and R3, R4 will be suitably positioned about the trailer to have a maximum output voltage change in response to a loading of the trailer. For example, strain gauge R1 would be suitably positioned so that when a load is applied to the trailer, the resistance R1 increases, whilst strain gauge R2 should be positioned so that loading of the trailer decreases the resistance R2. Equally, strain gauges R3 and R4 should be suitably positioned to have opposing resistance changes.in response to the loading of the trailer.

In addition, the pairs of strain gauges R1, R2 and R3, R4 are suitably arranged to have an opposed direction of output voltage change in response to the loading of the trailer. In other words, the output voltage of the potential divider R1 and R2 should increase in response to loading, whilst the output voltage of the potential divider R3, R4 should decrease, thereby providing the greatest differential change in output voltages between the outputs of the Wheatstone bridge. It will be realised that, alternatively, the output voltage of R1, R2 may decrease, whilst the output voltage of R3, R4 may increase.

The resistive values of strain gauges R1, R2, R3 and R4 can be suitably chosen in order to minimise power consumption of the circuit. For example, by using strain gauges having a high-resistance value, the current flowing through the Wheatstone bridge can be reduced, thereby extending battery life.

The preferred embodiment of the present invention further comprises a differential amplifier for detecting and amplifying the differential change in the output voltages of the Wheatstone bridge.

In the preferred embodiment, the differential amplifier is formed by a pair of operational amplifiers (op-amps) AMP1, AMP2 which share a common reference voltage across a resistor R5. Each op-amp amplifies a differential between the voltages WB1 and WB2 provided from the Wheatstone bridge. Therefore, the op-amp AMP1 amplifies the differential voltage WB1-WB2, whilst the op-amp AMP2 amplifies the differential voltage WB2-WB1.

The gain G of each op-amp used in the preferred embodiment is given by the equation:

$$G = 2 \times (\text{Feedback resistance}/R5)$$

wherein the feedback resistance is R6 or R7 for AMP1 and AMP2 respectively. Therefore, if R5=R6=R7, the gain of each op-amp AMP1, AMP2 is predetermined to be 2.

The preferred embodiment of the present invention further comprises a potential divider formed by resistors R8 and R9 for providing a reference voltage Vref, against which the respective outputs of the op-amps AMP1 and AMP2 can be compared. In this way, the circuit is able to compensate for changes in operating voltage due to, for example, a change in battery voltage. The values of the resistors R8 and R9 can be chosen to provide a suitable predetermined reference voltage Vref, whilst minimising the current flowing through the potential divider R8, R9.

A processor, such as a microcontroller, is arranged for measuring the output voltages of the op-amps AMP1, AMP2. The processor used in the preferred embodiment also measures the reference voltage Vref. Each voltage input is analogue to digital converted to allow measurement of the input voltages by the processor. The processor can then compare the differential amplifier outputs AMP1, AMP2 and determine the loading of the trailer.

If the loading of the trailer influencing the resistance of strain gauges R1-R4 approaches a predetermined threshold, the processor can activate a suitable combination of LEDS LED1-LED3 and provide a visible warning to a user. Each of resistors R10-R12 is provided as a load resistor for each of LEDS LED1-LED3. If the loading further approaches, equals or exceeds a predetermined level, the processor can activate the buzzer BUZZ1 to provide an audible alert to the user.

The preferred embodiment of the present invention is self contained and power is supplied by a suitable cell such as an AA battery. The preferred embodiment of the circuit comprises a NiCad cell, which can be recharged from a suitable power supply. A diode D2 and load resistor R14 are provided in the power supply line to prevent reverse current flow when the external power supply is not operational. A suitable power supply may be provided from a vehicle towing the trailer to which the circuit is attached, a solar panel or piezoelectric crystal also may be used to recharge the cell. It will be appreciated that any suitable power supply may be used to recharge the cell and these are merely examples of suitable power supplies.

The preferred embodiment has a power saving mode whereby the processor is able to turn the circuit off, thereby extending battery life. A momentary contact power switch SW1 is provided to momentarily connect the cell to a +V supply line of the circuit in response to user operation. The switch SW1 is connected in parallel with a transistor T1. A base connection of the transistor T1 is normally configured to be at a positive voltage due to the resistor R13. Once the user activates the switch SW1, the processor is arranged to sink current through diode D1, thereby lowering the voltage at the transistor base to less than battery voltage, about battery voltage minus 0.6V and where base current in T1 is limited by series resistor R15. Once the base voltage is lowered, the transistor T1 begins to conduct between the collector and emitter terminals, allowing the circuit to remain operational after the switch SW1 is released and has become open-circuit.

After a predetermined period of time, the processor can output a logic 1, or +V to the diode D1, thereby causing the transistor to cease conduction between the emitter and collector. In this case, the circuit is turned off until the user next activates the switch SW1.

In the embodiment of Figures 3 to 5 (or where applicable, in the embodiment of Figures 1 and 2) additional features may be used to those of, or with the diagram shown or as previously described when the load of the trailer is mounted on a vehicle.

The pedal 38 detects the presence of a load on the trailer, this in turn activates the strain gauge assembly and control circuit which weighs the nose load on the coupling. Furthermore, the circuit monitors and guides the operator by means of an audible indication, whilst the machine advances along the trailer to achieve a safe predetermined nose weight. For instance, the audible signal may be a repeated sound, the frequency of which may increase, as the optimal position is approached with that sound ceasing when optimum position is reached. Should the machine continue past the optimum position then the audible signal may be reactivated, for instance either in a repeated sound or in a continuous sound so that the operator is aware that the loading is too nose heavy rather than nose light.

Should the digger be located in the correct position and then further loads be added to the trailer to place the loading on the nose outside of the set parameters (which may be able to be adjusted to different set levels)(of 75 to 100 kgs for instance), then any of the audible signals may be emitted to alert the operator that the load needs rearranging. The system remains live for pre-determined time after the initial loading. In this instance in order that peak loads are not detected by the system when the trailer is in transit, a given number of depressions of the brake pedal spaced at typically a minimum of 5 seconds apart will turn the system off unless the alarm condition has condition has been registered for longer than 3 seconds or an alternative pre-determined figure prior to pedal depression. The system will also register whether the footbrake or the timer was responsible for turning the system off and how long the alarm condition was registered for. These events will be date and time stamped and will be downloadable for analysis.

The system is dormant when no load is present on the trailer.

Such an arrangement ensures the following benefits:

absence of excessive nose loads that result in vehicle damage;

absence of negative nose loads which make de-coupling extremely hazardous;

safe, progressive, equal braking on two or all four tyres of the trailer;

reduced prime mover brake wear;

reduced likelihood of axle overloading;

improved traction on cornering;

improved overall handling;

extends the life of both the prime and secondary vehicle and minimises downtime.

Furthermore, should the load shift during transportation such that the nose weight moves outside the safe working values an alarm may be given such as an audio alarm. Thus the alarm in any embodiment may be given from the trailer or in the towing vehicle or both.

In Figures 6 and 7 the chassis has been reinforced and has had weight removed, typically to make the trailer 550 or 500 Kg or less in weight. The underside of the frame is defined by parallel, sideways C-sections 260 that are integral with each other and connected at the forwards end by inwardly diverging C-sections 262. The stub axles 40A are secured through the upright sides of the C-section. On top of the sections 260 is mounted a frame 264 with the sides of that frame 264 projecting beyond the sections 260 to be supported by a rectangular frame 266 which extends down both sides of the trailer and across the front and rear of the trailer.

The frame 260 has an upwardly extending wall, a short outwardly extending wall and then a short downwardly extending lip. At the rear of the trailer the frame 264 depends downwardly from the frame 260 and has a rearwardly extending lip 268. At the sides of the remaining frame 264, an inner horizontal panel 270 is formed with the side panels 270 adding strength and providing support for a driven vehicle and with the front panel 270 adding strength.

Thus the sections 260 and the frame 26 together with the frame 266 form an extremely strong and rigid trailer which is also lightweight. In addition to monitoring the load applied to the trailer or as an alternative to monitoring the load it may also be desirable to monitor the function of the trailer itself as will now be described.

In any of the embodiments or variation described a cable 300 may be provided in which the cable is attached to the trailer and detachably connectable to a towing vehicle such as by hooking on to the vehicle.

In the event that the coupling between the trailer and the vehicle become detached the break away cable is pulled as the load of the trailer is transferred to the cable. The cable then pulls on the handbrake of the trailer to cause the trailer to stop. The cable remains attached between the vehicle and the trailer until the vehicle and trailer stop or until the burst ring on the trailer reaches a predetermined limit that causes disconnection of the break away cable and thus disconnection of the trailer from the towing vehicle.

In addition, when the vehicle is parked with the trailer being attached and the cable attached, the cable will act to activate the handbrake should the coupling become detached.

When the trailer is disconnected from a vehicle the front region of the trailer is additionally supported by a jockey wheel and good practice is to apply the handbrake. Operatives occasionally forget to do this. Consequently the trailer is provided with a socket that is only exposed when the handbrake is applied. The cable or electrical coil 302 is plugged then in to that socket after the handbrake has been applied. The trailer includes a sensor to determine when the jockey wheel is deployed, such as a load sensor. An alarm is arranged to be emitted if the coil is not plugged in to the socket that is exposed when the handbrake is applied within a predetermined period of time such as 3 seconds. Plugging the coil into the socket results in an electrical circuit being completed that prevents power from going to the alarm or disconnects power going to the alarm should the operative have delayed or forgotten to apply the handbrake.

The same electrical coil of the cable may be able to be plugged into another socket on the trailer or a socket on the vehicle. Again, an alarm may be given after a period of time if this connection is not made. The time period may be triggered by the load being relieved from the jockey wheel or the load being applied to the towing ball or forwards connection of the trailer. A control circuit on the trailer may indicate when any combination or all of the following occurs:

that the handbrake is released;

that the handbrake is applied;

that the power for the lights on the trailer are connected to the vehicle;

that the lights on the trailer work;

that any hydraulic connection between the vehicle and the trailer is effected;

that the hook of the cable is attached;

that the jockey wheel is fully retracted;

that the hook of the cable is attached to the vehicle.

An alarm may be given if any of the above indications are not given which may be an audible alarm. The alarm may be arranged to be given after a predetermined period of time such as 10 seconds to give the operative time to take all of the required actions.

Alternatively or additionally, an indication of any of the above may be given such as a display screen on the trailer giving a visual indication.

With such an arrangement, when the socket is on the trailer, the trailer can be used without any towing vehicle, even if the trailer has not been adapted in any way.

The control circuit may be able to be overridden for a predetermined period of time to allow the trailer to be manoeuvred manually.

When the connection of the cable is made there need not be any electrical connection between the parts that are connected and the attachment of the connection may activate a switch on the connector such as depressing a switch on the connector against a resilient bias on the connector. The connection may be made to dummy female non-spill or electrical suzi coupling and the male coupling 304 of the coil may have a switch built into it with a wire going back to the trailer. The connector that is revealed when the handbrake is applied may also be a dummy female connector.

Whilst the cable has been described as having the coil and connector it will be appreciated that the connector could be provided on a separate member.

In addition to the rigidity of the parts so far described, the cross members 80 that extend across the trailer from the pivot points of the wheels provide added strength to assist in keeping the shape of the frame stable even when being towed under severe conditions.

With the embodiment, information is allowed and caused to be passed back to the vehicle from either the strain gauges or a control circuit on the trailer or alternatively or additionally to the vehicle from the parts and events associated with the break away cable.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A trailer including a forwards connection arranged, in use, to be connected to a vehicle that tows the trailer, the trailer further including at least one wheel assembly at each side region of the trailer for supporting the trailer rearwards of the forwards connection, the trailer further including monitoring means arranged to monitor the bending moment about the wheel assemblies forwards of a connection of each wheel assembly to the trailer.

2. A trailer as claimed in Claim 1 in which the monitoring is arranged to occur forwards of each wheel assembly.

3. A trailer as claimed in any preceding claim in which the monitoring means are arranged to cease monitoring after a predetermined event has occurred, the predetermined event being connected to the braking of the vehicle.

4. A trailer as claimed in any preceding claim arranged to monitor the bending moment as the trailer is being loaded.

5. A trailer as claimed in Claim 4 comprising the monitoring means being arranged to give an indication as to when a load is in the correct region for safe loading of the trailer, and giving an indication as to when a load of the trailer is being moved towards a correct region of the trailer.

6. A trailer as claimed in any preceding claim comprising monitoring the bending moment at two regions, both forwards of the wheel assembly, with the two regions being laterally offset from each other.

7. A trailer as claimed in Claim 6 in which the two regions are located on either side of the centre line, extending in the fore and aft directions.

8. A trailer as claimed in Claim 6 or 7 in which the two regions are located on spaced structural members.

9. A trailer as claimed in Claim 8 in which the structural members converge towards each other in the forwards direction and are connected at the forwards connection.

**10.** A trailer as claimed in any of Claims 1 to 9 including a detachable towing coupling including the monitoring means, the trailer also including adjustment means whereby the monitoring means can be adjusted in order to enable the single coupling and monitoring means to be connected to trailers having different operating parameters.

**11.** A method of operating a trailer comprising monitoring the bending moment at a location forwards of a connection of a wheel to the trailer.

**12.** A method as claimed in Claim 11 comprising causing a load being mounted on the trailer to cause monitoring to commence.

**13.** A method as claimed in Claim 11 or 12 comprising adjusting the load in relation to the centre line of the trailer.

**14.** A method as claimed in any of Claims 11 to 13 comprising causing an indication from the monitoring means on the trailer to be passed forward to a vehicle to which the vehicle is towing the vehicle whereby an indication from the monitoring means is given in the vehicle.

**15.** A method as claimed in any of Claims 11 to 14 when using the trailer including monitoring means as claimed in any of Claims 1 to 9.

Fig. 1

POWER / CHARGING

SW1

Brake
Light
Feed

T1

D2

R14

2-4
Nicad
Cell
AA?

D1

BU221

R13

R15

PROCESSOR

MICROCONTROLLER

R12

LED3
MAX

LED2
MEAN

MIN

R10

R8

Vref

A-D
A-D

A-D

R11

R9

AMPLIFIERS

AMP2

R6 R7

R5

AMP2

wB2

WHEATSTONE
BRIDGE

R3

R1

R2

R4

12

Fig. 2

Fig. 3

110  16  30  32  36  40  42  38  80  18  R3, R4  R1, R2  20  300  302  304  26  14A  14B  44  46

Fig. 4

Fig. 5

EP 1 627 803 A1

Fig. 6

Fig. 7

EP 1 627 803 A1

**European Patent Office**

# EUROPEAN SEARCH REPORT

Application Number

EP 05 25 5007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 106 486 A (HOLLAND HITCH COMPANY) 13 June 2001 (2001-06-13) | 11,12,14 | B62D53/00 B60D1/00 G01L1/22 |
| A | * claims 1,15 * * paragraph [0026] * ----- | 1,13,15 | |
| X | GB 2 221 047 A (MICHAEL IAN * CORNWELL) 24 January 1990 (1990-01-24) * column 6, line 25 - column 7, line 12 * ----- | 11,12,14 | |
| A | US 3 669 756 A (RICHARD S. BRADLEY) 13 June 1972 (1972-06-13) * figure 5 * ----- | 1,11 | |

TECHNICAL FIELDS
SEARCHED (IPC)

B62D
B60D
G01L

The present search report has been drawn up for all claims

| Place of search | Date of completion of the search | Examiner |
|---|---|---|
| Munich | 25 November 2005 | Colonna, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 1 627 803 A1

## ANNEX TO THE EUROPEAN SEARCH REPORT
## ON EUROPEAN PATENT APPLICATION NO.

EP 05 25 5007

This annex lists the patent family members relating to the patent documents cited in  the above-mentioned European search report.
The members are as contained in the European Patent Office EDP file on
The European Patent Office is in no way  liable for these particulars which are merely  given for the purpose of information.

25-11-2005

| Patent document cited in search report | | Publication date | Patent family member(s) | | Publication date |
|---|---|---|---|---|---|
| EP 1106486 | A | 13-06-2001 | AU | 7172700 A | 14-06-2001 |
| | | | BR | 0005750 A | 17-07-2001 |
| | | | CA | 2326793 A1 | 09-06-2001 |
| | | | CN | 1298821 A | 13-06-2001 |
| | | | JP | 2001206256 A | 31-07-2001 |
| | | | US | 6302424 B1 | 16-10-2001 |
| | | | US | 2002067025 A1 | 06-06-2002 |
| GB 2221047 | A | 24-01-1990 | NONE | | |
| US 3669756 | A | 13-06-1972 | NONE | | |

EPO FORM P0459

For more details about this annex : see Official Journal of the European Patent Office, No. 12/82